# EUROPÄISCHE PATENTANMELDUNG

(11) **EP 0 584 600 A1**
(43) Veröffentlichungstag der Anmeldung: **02.03.1994**
(21) Anmeldenummer: 93112515.7
(22) Anmeldetag: 04.08.1993
(51) Int. Cl.: G02B 6/44

(54) **Verfahren zum Abzweigen einzelner Lichtwellenleiteradern aus einem ungeschnittenen Lichtwellenleiterkabel und eine Anordnung hierzu**

(30) Priorität: 13.08.1992 DE 4226857
(71) Anmelder: RXS Schrumpftechnik-Garnituren GmbH, D-58093 Hagen (DE)
(72) Erfinder: Boscher, Georg, Dipl.-Phys., D-58093 Hagen (DE); Sagemühl, Dieter, Dipl.-Ing., D-58313 Herdecke (DE)
(74) Vertreter: Fuchs, Franz-Josef, Dr.-Ing.

(57) **Zusammenfassung**

Bei der Erfindung handelt es sich um ein Verfahren zum Abzweigen einzelner Lichtwellenleiteradern (6) aus einem ungeschnittenen Lichtwellenleiterkabel (8), wobei eine Spleißmuffe (1) und eine Anschneidemuffe (2) in einem Abstand (19), der dem erforderlichen Längenplus einer Lichtwellenleiterader (6) entspricht, angeordnet sind. In der Anschneidemuffe (2) wird die abzuzweigende Lichtwellenleiterader 6 nach Entfernung des Kabelmantels abgetrennt und aus einer Öffnung des Kabelmantels in der Spleißmuffe (1) herausgezogen, so daß auf diese Weise das Längenplus der Lichtwellenleiterader (6) erhalten wird. Nach dem Spleißen der abzuzweigenden Lichtwellenleiteradern (6) werden die Öffnungsbereiche (15, 16) durch geeignete Muffen (1, 2) überdeckt und abgedichtet.

## Beschreibung

Die Erfindung betrifft ein Verfahren zum Abzweigen einzelner Lichtwellenleiteradern aus einem ungeschnittenen Lichtwellenleiterkabel.

Verfahren zum Abzweigen einzelner Leitungen aus einem ungeschnittenen Kabel heraus sind allgemein bekannt und bei Kupferkabeln gängige Praxis. Es sind hierbei keine Probleme gegeben; denn für die Spleißtechnik bei Kupferkabeln bedarf es keiner besonderen Verfahren. Diese Technik ist im allgemeinen als "Anschneidetechnik" bekannt.

Schwieriger gestaltet sich jedoch die Anwendung der Anschneidetechnik bei Lichtwellenleiterkabeln; denn hier wird zum Spleißen eine mehr oder weniger große Aderlänge benötigt, die zwangsläufig aus dem Absetzmaß kommen muß. Besonders für Fusionsspleiße wird für die Handhabung der Lichtwellenleiterfasern in thermischen Spleißgeräten oder bei Dämpfungsmessungen unter günstigen Voraussetzungen eine minimale Adernlänge von ca. 500 mm benötigt. Sollen sinnvollerweise Bündel- oder Aderreserven berücksichtigt werden, erfordert dies Absetzmaße, die akzeptable Muffenlängen bei weitem übersteigen.

Für vorliegende Erfindung stellt sich somit die Aufgabe, ein Verfahren zu schaffen, bei dem die Verhältnisse bei Lichtwellenleiterkabeln berücksichtigt sind, das heißt, daß Maßnahmen getroffen werden, mit denen ein erforderliches Längenplus einer abzuzweigenden Lichtwellenleiterader aus einem ungeschnittenen Lichtwellenleiterkabel heraus hergestellt werden kann. Die gestellte Aufgabe wird nun mit einem Verfahren zum Abzweigen einzelner Lichtwellenleiteradern aus einem ungeschnittenen Lichtwellenleiterkabel dadurch gelöst, daß das Lichtwellenleiterkabel in einer zum Abtrennen einer Lichtwellenleiterader benötigten Länge vom Kabelmantel befreit wird, daß über den Bereich des vom Kabelmantel befreiten Lichtwellenleiterkabels eine Anschneidemuffe aufgebracht wird, daß das Lichtwellenleiterkabel in einem Abstand, der dem zum Spleißen benötigten Längenplus einer Lichtwellenleiterader entspricht, ein zweites Mal vom Kabelmantel in einer zum Herausziehen der geschnittenen Lichtwellenleiterader benötigten Länge befreit wird, daß im Bereich der zweiten Öffnung die in der Anschneidemuffe abgetrennte Lichtwellenleiterader aus dem Kabelverband herausgezogen wird, daß die herausgezogene Lichtwellenleiterader mit einer Lichtwellenleiterader eines abzweigenden Kabels gespleißt wird, daß das Längenplus der gespleißten Lichtwellenleiterader in einer Spleißhaltevorrichtung abgelegt wird und daß über diesem zweiten Schnittbereich und der Spleißhaltevorrichtung eine Spleißmuffe angeordnet wird.

Weiterhin ist Aufgabe der Erfindung, eine Anordnung zu gestalten, mit deren Hilfe das vorgenannte Verfahren verwirklicht werden kann. Diese Aufgabe wird mit einer Anordnung nach den Ansprüchen 7 und folgende gelöst.

Der Vorteil des erfindungsgemäßen Verfahrens und der entsprechenden Anordnung hierzu liegen in erster Linie darin, daß nach einer relativ einfachen Weise das erforderliche Adernplus von abzweigenden Lichtwellenleiteradern geschaffen werden kann. Nach dem erfindungsgemäßen Verfahren werden nun statt einer einzigen, sehr langen Kabelmuffe zwei kleine Kabelmuffen verwendet, die speziell auf die jeweiligen Erfordernisse abgestimmt sind und die im Abstand voneinander angeordnet sind. Dieser Abstand richtet sich dabei je nach Bedarf an Aderlängenplus bzw. Aderlängenreserve, so daß man hier sehr variabel ist.

So wird in einer Kabelmuffe, der sogenannten Spleißmuffe, die Spleißung vorgenommen, während in der zweiten Kabelmuffe, der sogenannten Anschneidemuffe, lediglich die zum Abzweigen benötigten Lichtwellenleiteradern des Lichtwellenleiterkabels abgeschnitten werden, das heißt durchtrennt werden. Die in der Anschneidemuffe abgetrennten Lichtwellenleiteradern werden dann in der Spleißmuffe aus dem Kabelverbund herausgezogen und entsprechend mit Lichtwellenleiteradern von abzweigenden Kabeln gespleißt. Hierzu wird das Lichtwellenleiterkabel im Bereich der Anschneidemuffe vom Kabelmantel in einer Länge, die zum Anschneiden bzw. Abtrennen der Lichtwellenleiteradern benötigt wird, vorzugsweise um ca. 20 mm, befreit. Nachdem das entsprechende Bündel (Bündel- oder Hohladern), Bändchen bzw. die entsprechende Ader (fest umhüllt oder Adern in Kammerkabeln oder die Einzelfaser eines Maxibündels, von der zuvor die Hüllen auf einer gewissen Länge entfernt und anschließend wieder ergänzt werden) durchtrennt wurde, können Zugabfangungen, soweit diese im oder direkt unter dem Kabelmantel verlaufen, sowie die Schirmung wieder hergestellt werden. Die hier verwendeten Gehäuse und der jeweilige Aufbau der Kabelmuffen können mit mechanischen oder thermischen Dichtungssystemen versehen werden und sind im Grunde unabhängig vom Prinzip des Verfahrens zum Abzweigen mindestens einer Lichtwellenleiterader aus einem ungeschnittenen Kabel heraus gemäß der Erfindung. Für die Anschneidemuffe, die besonders klein ausgelegt sein kann, eignen sich besonders Schrumpfmanschetten, die vorzugsweise eine Länge von 120 mm und einen Durchmesser entsprechend dem Kabeldurchmesser aufweisen. Für die Spleißmuffen mit Verzweigungen eignen sich besonders gut Klemmuffen aus stirnseitigen Dichtungskörpern und einem Muffenrohr mit Längsverschluß. In der Spleißmuffe wird der Kabelmantel des Lichtwellenleiterkabels in etwa auf einer Länge von 100 mm entfernt. Aus dieser Öffnung werden dann die in der Anschneidemuffe abgetrennten Lichtwellenleiter-Bündel oder -Adern herausgezogen und gespleißt. Außerdem werden auch hier die erforderlichen Abschlüsse wie Abdichtung und Zugabfangung an der Öffnung des Kabelmantels angeordnet. Die Spleiße werden dann mit entsprechendem, an sich bekanntem Spleißschutz versehen und mit dem erforderlichen Aderplus zum Beispiel in einer Spleißkassette abgelegt.

Hierzu eignen sich zum Beispiel auch spezielle Spleißkassetten, die so ausgeformt sind, daß sie z.B. mittig über der Absatzstelle des Lichtwellenleiter-Hauptkabels montiert werden können, so daß sie auch gleichzeitig als Teil der Zugabfangung zur Überbrückung von Zug- und Druckkräften verwendet werden können.

Für die Kabelmuffen, speziell für die Spleißmuffen eignen sich auch Muffen aus Halbschalen mit einem mechanischen Dichtungssystem. Doch ist auch hier die Schrumpftechnik einsetzbar.

Für entsprechende Service-Angelegenheiten können Durchführungen und Durchverbindungen vorgesehen werden, die zum Beispiel auf der Innenseite der Kabelmuffe mit den im Lichtwellenleiter-Kabel mitgeführten Kupferleitungen verbunden werden können, so daß auf diese Weise ein Adapter für Telefon- oder Meßeinrichtungen hergestellt ist.

Das erfindungsgemäße Verfahren kann im Grunde für jede Art von Kabeltechnik eingesetzt werden, so zum Beispiel auch bei gefüllten oder bei luftdrucküberwachten Kabelsystemen. Hier werden dann entsprechende Ventile angebracht.

Mittels einer Figur wird das Verfahren wie auch die hierfür erforderliche Anordnung gemäß der Erfindung näher erläutert.

Bei der Herstellung einer Abzweigung von Lichtwellenleiteradern aus einem ungeschnittenen Kabel heraus, ergeben sich für das Spleißen der Lichtwellenleiteradern Schwierigkeiten insofern, als ein gewisses Längenplus der Lichtwellenleiteradern zur Verfügung stehen muß. Da bei den Lichtwellenleiteradern insbesondere auch Augenmerk auf die minimal zulässigen Biegeradien der Lichtwellenleiteradern gelegt werden muß, ist das benötigte Längenplus, das dem Lichtwellenleiterkabel entnommen werden muß, nicht mehr vernünftigerweise mit einem Längenbereich einer Normalmuffe zu erfassen. Gemäß der Erfindung ist nun ein Verfahren entwickelt, durch das man das erforderliche Längen-plus an Lichtwellenleiteradern erhalten kann. So wird das Lichtwellenleiterkabel 8 an zwei hintereinander liegenden Stellen vom Kabelmantel rundum oder auch nur teilweise entfernt. Bei einer ersten Stelle wird lediglich ein Öffnungsbereich 16 benötigt, der ausreicht um abzuzweigende Lichtwellenleiteradern 6 im Lichtwellenleiterkabel 8 abzutrennen, so daß zwei Lichtwellenleiteraderenden 6a und 6b entstehen. Das Lichtwellenleiterende 6b bleibt unbelegt im weiteren Kabelverbund bestehen, während das abzuzweigende Lichtwellenleiteradernende 6a in einem späteren Arbeitsgang in der zweiten Muffe herausgezogen wird. Die Kabelmantelenden des Lichtwellenleiterkabels 8 werden dann in an sich bekannter Weise mit entsprechenden Kabelabschlüssen versehen, die zum Beispiel Kabelabfangungen 5 mit Schellen 11 beinhalten. Bei Bedarf können auch zusätzliche kraftübertragende Elemente 20, wie Schienen oder dergleichen, angeordnet werden. Auch Schirmverbindungen 12 können in der an sich bekannten Art ausgeführt werden. Über diesen Öffnungsbereich 16 des Kabelmantels wird dann eine Kabelmuffe, die sogenannte Anschneidemuffe 2, dicht aufgebracht. Diese Kabelmuffe kann nun besonders klein gestaltet werden, wozu sich am besten Kabelmuffen in Form von manschettenartigen Schrumpfmuffen mit Längsverschlüssen eignen. Hier kann man mit einer Muffenlänge 18 von 120 mm auskommen, wobei der Durchmesser gegenüber dem Kabel kaum aufträgt. Doch können auch sogenannte mechanische Kabelmuffen angeordnet werden, die im wesentlichen aus stirnseitigen Dichtungskörpern und einem längsgeschlitzten Muffenrohr bestehen. Auch Muffenausführungen in Halbschalentechnik können prinzipiell verwendet werden.

Im Abstand 19, der in etwa der Größenordnung des erforderlichen Längenplus der Lichtwellenleiteradern entspricht, wird nun ein zweites Mal das Lichtwellenleiterkabel 8 in einem Öffnungsbereich 15 vom Kabelmantel zumindest teilweise befreit, wobei sich die Länge des Öffnungsbereiches 15 danach richtet, wieviel Platz zum Ausziehen der bereits in der Anschneidemuffe 2 abgetrennten Lichtwellenleiterader 6a benötigt wird. Nach dem Ausziehen dieser abzuzweigenden Lichtwellenleiterader 6a wird der Spleiß mit dem entsprechenden Lichtwellenleiter des abzweigenden Kabels 9 hergestellt, wobei gebräuchliche Spleißschutzelemente 10 verwendet werden. Das Längenplus der Lichtwellenleiterader 6 wird nun in bekannter Weise in Bögen innerhalb einer Spleißkassette 4 untergebracht. Im übrigen lassen sich dann hier die an sich bekannten Kabelabschlußeinheiten bezüglich der Kabelabfangungen und dergleichen mit Abfangelementen 5 und Schellen 11 einsetzen, wobei auch Schirmverbindungen 12 zwischen den Enden des Lichtwellenleiterkabels 8 hergestellt werden können. Kraftübertragende Elemente können dann hier ebenfalls angesetzt werden. So ist jedoch auch möglich, daß die Spleißkassette 4 als kraftübertragendes Element mit den Enden des Kabelmantels des Lichtwellenleiterkabels 8 verbunden wird. Um diese Anordnungen herum wird dann eine weitere Kabelmuffe, die sogenannte Spleißmuffe 1, dicht aufgebracht, wobei hier diese Ausführung der Spleißmuffe 8 nur angedeutet ist; denn es bieten sich hierfür alle in der Kabelverbindungstechnik gebräuchlichen Gestaltungen auf der Basis von sogenannten mechanischen Muffen oder von Schrumpfmuffen an. Hier wird die Länge 17 der Spleißmuffe 1 im wesentlichen durch die Spleißeinheiten bestimmt. In dieser Figur ist zum Beispiel eine Ausführungsform angedeutet, die aus zwei Halbschalen besteht. In den Abzweigbereichen sind ebenfalls die an sich bekannten Techniken bezüglich der Abdichtung in den Abzweigbereichen einsetzbar. Dies kann beispielsweise mit Hilfe von angepaßten Dichtungsstücken erfolgen. Bei Verwendung von Schrumpftechnik bietet sich die an sich bekannte Technik zur Abdichtung im Zwickelbereich mit Hilfe von Klammern an, welche die Kabelmuffe zwischen den abzweigenden Kabeln dichtend zusammenhalten.

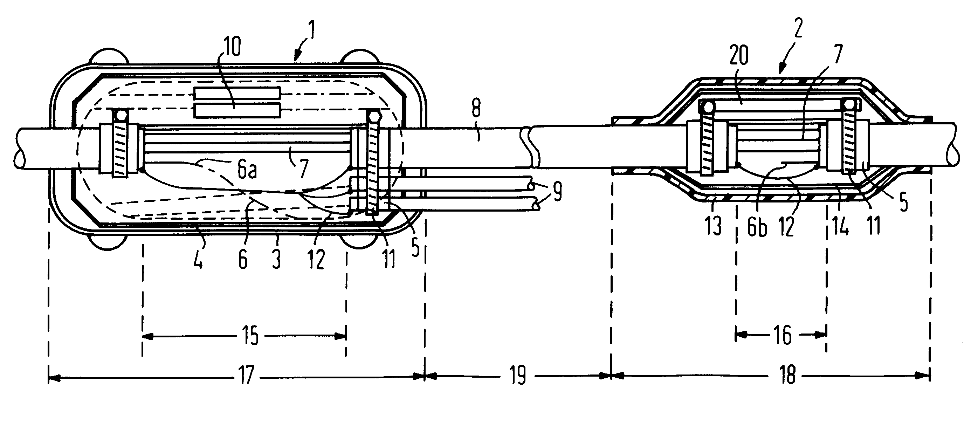

## Patentansprüche

1. Verfahren zum Abzweigen einzelner Lichtwellenleiteradern aus einem ungeschnittenen Lichtwellenleiterkabel,
**dadurch gekennzeichnet,**
daß das Lichtwellenleiterkabel (8) in einer zum Abtrennen einer Lichtwellenleiterader (6) benötigten Länge (16) vom Kabelmantel befreit wird, daß über den Bereich des vom Kabelmantel befreiten Lichtwellenleiterkabels (8) eine Anschneidemuffe (2) aufgebracht wird, daß das Lichtwellenleiterkabel (8) in einem Abstand (19), der dem zum Spleißen benötigten Längenplus einer Lichtwellenleiterader (6) entspricht, ein zweites Mal vom Kabelmantel in einer zum Herausziehen der geschnittenen Lichtwellenleiterader (6a) benötigten Länge befreit wird, daß im Bereich der zweiten Öffnung die in der Anschneidemuffe (2) abgetrennte Lichtwellenleiterader (6a) aus dem Kabelverband herausgezogen wird, daß die herausgezogene Lichtwellenleiterader (6a) mit einer Lichtwellenleiterader (6) eines abzweigenden Kabels (9) gespleißt wird, daß das Längenplus der gespleißten Lichtwellenleiterader (6) in einer Spleißhalterung (4) abgelegt wird und daß über diesem zweiten Schnittbereich (17) und der Spleißhaltevorrichtung (4) eine Spleißmuffe (1) angeordnet wird.

2. Verfahren nach Anspruch 1,
**dadurch gekennzeichnet,**
daß für die Spleißmuffe (1) und die Anschneidemuffe (2) wärmerückstellfähige Schrumpfmuffen verwendet werden.

3. Verfahren nach Anspruch 1,
**dadurch gekennzeichnet,**
daß für die Spleißmuffe (1) und die Anschneidemuffe (2) mechanisch verschließbare Klemmuffen verwendet werden.

4. Verfahren nach Anspruch 1,
**dadurch gekennzeichnet**,
daß eine mechanisch verschließbare Klemmuffe vorzugsweise als Spleißmuffe (1), und eine wärmerückstellfähige Schrumpfmuffe, vorzugsweise als Anschneidemuffe (2), verwendet werden.

5. Verfahren nach einem der vorhergehenden Ansprüche,
**dadurch gekennzeichnet,**
daß das Adernplus der gespleißten Lichtwellenleiterader (6) in einer an sich bekannten Spleißkassette (4) eingelegt wird, wobei der Spleiß (10) nach einem an sich bekannten Spleißverfahren durchgeführt wird.

6. Verfahren nach einem der vorhergehenden Ansprüche,
**dadurch gekennzeichnet,**
daß die Kabelmantelenden in den vom Kabelmantel befreiten Bereichen des Lichtwellenleiterkabels (8) innerhalb der Muffen (1, 2) mit Kabelabfangvorrichtungen (5, 11) und/oder mechanischen, kraftüberbrückenden Elementen (20) versehen werden und daß vorhandene Schirmungen (12) überbrückt werden.

7. Anordnung zum Abzweigen einzelner Lichtwellenleiteradern (6) aus einem ungeschnittenen Lichtwellenleiterkabel (8) nach dem Verfahren der vorhergehenden Ansprüche,
**dadurch gekennzeichnet,**
daß eine Anschneidemuffe (2) über dem angeschnittenen Bereich (16) des Lichtwellenleiterkabels (8) für das Abtrennen einer Lichtwellenleiterader (6) angeordnet ist, daß eine Spleißmuffe (1) im Abstand (19), der dem zum Spleißen einer Lichtwellenleiterader (6) benötigten Längenplus entspricht, über dem Lichtwellenleiteradernspleiß (10) und dem zweiten vom Kabelmantel befreiten Bereich (15) des Lichtwellenleiterkabels (8) angeordnet ist.

8. Anordnung nach Anspruch 7,
**daduch gekennzeichnet,**
daß die Spleißmuffe (1) und die Anschneidemuffe (2) Klemmuffen sind, insbesondere bestehend aus einem längsgeschlitzten Muffenrohr mit längsseitigen Verschlußeinrichtungen und stirnseitig angeordneten Dichtungskörpern mit anpaßbaren Kabeleinlässen.

9. Anordnung nach Anspruch 7,
**dadurch gekennzeichnet,**
daß die Spleißmuffe (1) und die Anschneidemuffe (2) wärmerückstellfähige Schrumpfmuffen sind.

10. Anordnung nach Anspruch 7,
**dadurch gekennzeichnet,**
daß eine der Muffen , vorzugsweise die Spleißmuffe (1), in mechanischer Technik und die zweite Muffe, vorzugsweise die Anschneidemuffe (2), in Schrumpftechnik ausgeführt ist.

11. Anordnung nach einem der Ansprüche 7 is 10,
**dadurch gekennzeichnet,**
daß an den Kabelmantelenden in den vom Kabelmantel entfernten Bereichen (15, 16) des Lichtwellenleiterkabels (8) an sich bekannte Kabelabfangvorrichtungen (5, 11) und/oder kraftüberbrückende Elemente (20) angeordnet sind.

12. Anordnung nach einem der Ansprüche 7 bis 11,
**dadurch gekennzeichnet,**
daß der Abstand (19) zwischen den beiden Muffen vorzugsweise in der Größenordnung von 500 mm beträgt.

13. Anordnung nach einem der Ansprüche 7 bis 12,
**dadurch gekennzeichnet,**
daß die Länge des vom Kabelmantel befreiten Bereiches (16) des Lichtwellenleiterkabels (8) in der Anschneidemuffe (2) in der Größenordnung von 20 mm liegt.

14. Anordnung nach einem der Ansprüche 7 bis 13,
**dadurch gekennzeichnet,**
daß der Öffnungsbereich (16) der Kabelmantelentfernung sich am Lichtwellenleiterkabel (8) rundum erstreckt.

15. Anordnung nach einem der Ansprüche 7 bis 13,
**dadurch gekennzeichnet,**
daß der Öffnungsbereich (16) der Kabelmantelentfernung sich nur auf einen Teilumfang des Lichtwellenleiter-Kabels (8) erstreckt.

16. Anordnung nach einem der Ansprüche 7 bis 15,
**dadurch gekennzeichnet,**
daß eine vorhandene Schirmung (12) im Lichtwellenleiterkabel (8) in den aufgetrennten Bereichen (15, 16) überbrückt ist.

17. Anordnung nach einem der Ansprüche 7 is 16,
**dadurch gekennzeichnet,**
daß die Länge (18) der Anschneidemuffe vorzugsweise 120 bis 150 mm und der Durchmesser ca. 50 mm beträgt und daß die Länge (17) der Spleißmuffe (1) vorzugsweise in der Größenordnung von 250 mm liegt.

18. Anordnung nach einem der Ansprüche 7 bis 17,
**dadurch gekennzeichnet**,
daß die Länge des Öffnungsbereiches (15) des Kabelmantels des Lichtwellenleiterkabels (8) in der Spleißmuffe (1) vorzugsweise 100 mm betgrägt.

19. Anordnung nach einem der Ansprüche 7 bis 18,
**dadurch gekennzeichnet,**
daß jeder Lichtwellenleiterspleiß mit einem an sich bekannten Spleißschutz (10) versehen ist.

20. Anordnung nach einem der Ansprüche 7 bis 19,
**dadurch gekennzeichnet,**
daß die Spleißkassette (4) für die Aufnahme der Adernspleiße (10) und der Überlängen der gespleißten Lichtwellenleiteradern (6) gleichzeitig eine kraftübertragende Funktion aufweist und an den jeweiligen Enden des Lichtwellenleiterkabelmantels befestigt ist.

21. Anordnung nach einem der Ansprüche 7 bis 20,
**dadurch gekennzeichnet,**
daß an der Spleißmuffe (1) Adapteranschlüsse angeordnet sind, die vorzugsweise mit den Kupferadern des Lichtwellenleiters (8) in Verbindung gebracht sind.

22. Anordnung nach einem der Ansprüche 7 bis 21,
**dadurch gekennzeichnet,**
daß das Lichtwellenleiterkabel (8) mit an sich bekannten Füllmitteln gefüllt ist, daß hierfür an sich bekannte Abschlußelemente innerhalb der Spleißmuffe (1) und/oder Anschneidemuffe (2) angeordnet sind und daß vorzugsweise die Spleißmuffe (1) und/oder Anschneidemuffe (2) ebenfalls mit Füllmitteln gefüllt ist.

23. Anordnung nach einem der Ansprüpche 7 bis 21,
**dadurch gekennzeichnet,**
daß luftdrucküberwachte Lichtwellenleiterkabel (8) in die Spleißmuffe (19) und die Anschneidemuffe (2) eingeführt sind, und daß die Spleißmuffe (19) und die Anschneidemuffe (2) Anschlußeinheiten, vorzugsweise Ventile, zum Anschluß von Meß- und/oder Fülleinrichtungen aufweisen.
